# EUROPEAN PATENT APPLICATION

(11) **EP 4 737 778 A1**
(43) Date of publication of application: **06.05.2026**
(21) Application number: 24830740.7
(22) Date of filing: 25.06.2024
(51) Int. Cl.: F16K 27/06, B65D 33/36, B65D 30/24, F16K 5/06

(54) **FLANGE MEMBER, VALVE, LIQUID BAG, AND CONTAINER**

(30) Priority: 30.06.2023 CN 202310800500
(71) Applicant: Horen Cortp Co., Ltd., Shanghai 200233 (CN)
(72) Inventor: FANG, Zhengwei, Shanghai 200233 (CN)
(74) Representative: Viering, Jentschura & Partner mbB Patent- und Rechtsanwälte
(86) International application number: PCT/CN2024/101220
(87) International publication number: WO 2025/002099

(57) **Abstract**

The present application relates to a flange member, a valve, a liquid bag, and a container. The flange member (24) comprises a tube body (241) and a flange plate (242), and a first passage (2411) runs through the inside of the tube body (241), the two ends of the first passage (2411) being respectively a first inlet end (2412) and a first outlet end (2413), the inner wall of the tube body (241) having an annular flange (2414) extending into the first passage (2411), and the annular flange (2414) being closer to the first outlet end (2413). The tube body (241) extends through the flange plate (242) in the axial direction of the flange plate (242) and is fixedly connected to the flange plate (242), and the flange plate (242) is closer to the first inlet end (2412). The flange member can reduce the pulling force on the liquid bag at the edges of the flange member, thereby reducing the probability of damage to the liquid bag due to the pulling force.

## Description

This application claims priority from the following Chinese patent application:
Filing date: June 30, 2023; Application number: 202310800500.2; Invention title: Flange member, valve, liquid bag, and container;
The entirety of the above application is incorporated herein by reference.

### Technical Field

The present invention relates to technical filed of valve, in particular to a flange member, a valve, a liquid bag, and a container.

### Background

The existing turnover containers are lined with a liquid bag to contain liquid. Existing liquid bags used in intermediate bulk containers are equipped with valves that can be opened and closed multiple times. These types of valves are typically secured to the liquid bag by welding the flange to the liquid bag and then assembling the flange with the valve body. When the liquid bag is installed in an intermediate bulk container, since the flange surface where the flange and the liquid bag are welded is relatively far from the side wall of the intermediate bulk container, after filling with liquid, the liquid bag near the flange surface will cling to the side wall of the container under the action of the liquid, generating a tensile pulling force between the liquid and the side wall, increasing the probability of the liquid bag to damage due to this pulling force during transportation.

### Summary of the Invention

The object of the present invention is to provide a flange member, a valve, a liquid bag and a container, so as to reduce the pulling force of the liquid bag at the edge of the flange member, thereby reducing the probability of the liquid bag to damage due to the pulling force.

To achieve the above object, the technical solutions of the present invention are as follows:
a flange member, comprising:
a tube body, which has a first passage extending therethrough, two ends of the first passage are respectively a first inlet end and a first outlet end, and an inner wall of the tube body has an annular flange extending into the first passage, the annular flange is closer to the first outlet end; and
a flange plate;
wherein the tube body extends through the flange plate in an axial direction of the flange plate and is fixedly connected to the flange plate, and the flange plate is closer to the first inlet end.

In one embodiment, the inner wall of the tube body is provided with an inwardly concave snapping groove or an outwardly convex snapping portion, and the snapping groove or the snapping portion is located between the first inlet end and the annular flange.

In one embodiment, the annular flange is provided with an annular recess axially recessed along the first passage, and an opening side of the annular recess faces the first inlet end.

In one embodiment, an outer end surface of the flange plate is flush with an end surface of the first inlet end, and an outer end surface of the annular flange is flush with an end surface of the first outlet end.

The present invention also provides a valve, comprising:
a valve body, which has a valve cavity, an inlet portion, and an outlet portion, the inlet portion has a second inlet passage extending therethrough and communicating with the valve cavity, and the outlet portion has a second outlet passage extending therethrough and communicating with the valve cavity;
a valve core, which is movably provided in the valve cavity;
a driving member, which extends through the valve body and drives the valve core to open or close the valve cavity;
a flange member, comprising a tube body and a flange plate, wherein the tube body has a first passage extending therethrough, two ends of the first passage are respectively a first inlet end and a first outlet end, and an inner wall of the tube body has an annular flange extending into the first passage, the annular flange is closer to the first outlet end; the tube body extends through the flange plate in an axial direction of the flange plate and is fixedly connected to the flange plate, and the flange plate is closer to the first inlet end;
wherein the outlet portion is located in the first passage from the first inlet end, and the outlet portion is sealedly connected to the flange member.

In one embodiment, the inner wall of the tube body and the outer wall of the outlet portion are respectively provided with one of a snapping groove and a snapping portion, and the snapping groove or the snapping portion of the inner wall of the tube body is located between the first inlet end and the annular flange, and the tube body is operatively fixed to the outlet portion through the snapping groove and the snapping portion.

In one embodiment, the annular flange is provided with an annular recess axially recessed along the first passage, the opening side of the annular recess faces the first inlet end, and a sealing member is disposed in the annular recess; the outlet portion has a sealing portion directly facing the annular recess, and the sealing portion is in sealing contact with the sealing member.

In one embodiment, the second outlet passage is coaxially arranged with the first passage.

The present invention also provides a liquid bag, comprising:
a liquid bag body, which has a sealed cavity and an opening communicating with the cavity;
a flange member, wherein the flange member is any of the flange members described above;
wherein the first outlet end of the tube body passes through the opening and is located in the cavity, and the surface of the flange plate facing the first outlet end is sealedly connected and fixed to the liquid bag body around the opening.

The present invention also provides a liquid bag, comprising:
a liquid bag body, which has a sealed cavity and an opening communicating with the cavity;
a valve, which is any of the valves described above;
wherein the first outlet end of the tube body passes through the opening and is located in the cavity, and the surface of the flange plate facing the first outlet end is sealedly connected and fixed to the liquid bag body around the opening.

The present invention provides a container, comprising:
a box body, which comprises a base and a plurality of side panels, the plurality of side panels and the base form an accommodating cavity;
a liquid bag, a liquid bag body thereof has a sealed cavity and an opening communicating with the cavity;
a valve, which is any of the valves described above;
wherein the first outlet end of the tube body passes through the opening and is located in the cavity, and a surface of the flange plate facing the first outlet end is sealedly connected and fixed to the liquid bag body around the opening.

In one embodiment, the box body is provided with a window, and the valve is movably located in the window.

In one embodiment, a boss portion protruding into the accommodating cavity is provided on an edge of the window facing an inner side wall of the accommodating cavity, and a top surface of the boss portion does not exceed the flange member.

The present invention adopts the above technical solution, which has the beneficial effect that the flange member of the present invention arranges the flange plate connected to the bag body of the liquid bag at the inlet end, so as to reduce the distance between the bag body near the flange member and the side wall of the box body, thereby reducing the pulling force on the liquid bag at the edge of the flange member, and further reducing the probability of the liquid bag to damage due to this pulling force during transportation.

### BRIEF DESCRIPTION OF THE DRAWINGS

FIG.1 shows a perspective cross-sectional view of a container.
FIG.2 shows an enlarged view of position A in FIG. 1 .
FIG.3 shows a schematic cross-sectional view of the container.
FIG.4 shows an enlarged view of position B in FIG. 3 .
FIG.5 shows a perspective view of a valve.
FIG.6 shows a cross-sectional view of the valve.
FIG.7 shows an exploded view of the valve.
FIG.8 shows a cross-sectional view of the valve with the flange member removed.
FIG. 9 shows a perspective view of the flange member.
FIG.10 shows a cross-sectional view of the flange member.

List of reference numerals: 1. Container; 11. Box body; 110. Accommodating cavity; 111. Base; 112. Side plate; 12. Window; 121. Boss portion; 2. Valve; 21. Valve body; 211. Valve cavity; 212. Inlet portion; 2121. Second inlet passage; 213. Outlet portion; 2131. Second outlet passage; 2132. Snapping portion; 2133. Sealing portion; 214. Hook member; 22. Valve core; 221. Outer valve seat; 222. Inner valve seat; 223. Positioning ring; 23. Driving member; 24. Flange member; 241. Tube body; 2411. First passage; 2412. First inlet end; 2413. First outlet end; 2414. Annular flange; 2415. annular recess; 2416. Flange sealing ring; 2417. Snapping groove; 242. Flange plate; 25. Operating rod, 26. Positioning rod, 27, valve cover.

### DETAILED DESCRIPTION OF EMBODIMENTS

The preferred embodiments of the present invention will be described in detail below with reference to the accompanying drawings, so that the objects, features and advantages of the present invention can be more clearly understood. It should be understood that the embodiments shown in the accompanying drawings are not intended to limit the scope of the present invention, but are only intended to illustrate the essential spirit of the technical solution of the present invention.

In the following description, for the purpose of illustrating the various disclosed embodiments, certain specific details are set forth in order to provide a thorough understanding of the various disclosed embodiments. However, those skilled in the relevant art will recognize that the embodiments may be practiced without one or more of these specific details. In other cases, well-known devices, structures, and techniques associated with this application may not be shown or described in detail to avoid unnecessarily obscuring the description of the embodiments.

Unless the context requires otherwise, throughout the specification and claims, the word "comprise" and variations such as "include" and "have" should be construed in an open, inclusive sense, that is, should be interpreted to mean "including, but not limited to."

Reference throughout this specification to "one embodiment" or "an embodiment" means that a particular feature, structure, or characteristic described in connection with the embodiment is included in at least one embodiment. Thus, the appearances of "in one embodiment" or "in an embodiment" in various places throughout this specification are not necessarily all referring to the same embodiment. Furthermore, the particular features, structures, or characteristics may be combined in any manner in one or more embodiments.

As used in this specification and the appended claims, the singular forms "a," "an," and "the" include plural referents unless the context clearly dictates otherwise. It should be noted that the term "or" is generally employed in its sense including "and/or" unless the context clearly dictates otherwise.

In the following description, in order to clearly show the structure and working mode of the present invention, many directional words will be used for description, but words such as "front", "back", "left", "right", "outside", "inside", "outward", "inward", "up", and "down" should be understood as convenient terms and should not be understood as restrictive terms.

Furthermore, terms such as "horizontal," "vertical," and "overhanging" do not necessarily imply that a component must be absolutely horizontal or overhanging, but rather that it can be slightly tilted. For example, "horizontal" simply means that its direction is more horizontal than "vertical," and does not mean that the structure must be completely horizontal, but rather that it can be slightly tilted.

It should also be noted that, in the description of this application, unless otherwise expressly specified or limited, the terms "provided," "installed," "linked," and "connected" should be understood in a broad sense. For example, they can refer to fixed connections, detachable connections, or integral connections; they can refer to mechanical connections or electrical connections; they can refer to direct connections or indirect connections through an intermediate medium; and they can refer to internal communication between two components. Those skilled in the art will understand the specific meanings of the above terms in this application based on the specific circumstances.

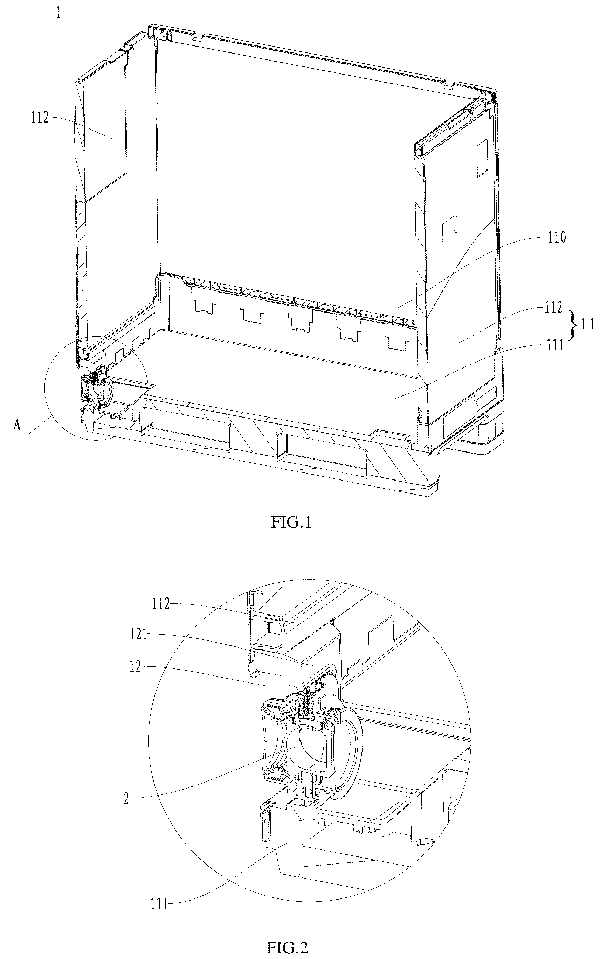

One specific embodiment of the present application provides a container and a liquid bag installed in an accommodating cavity. Referring to FIGS.1-4, the container 1 comprises a box body 11 and a liquid bag, wherein the box body 11 is surrounded by a base 111 and a plurality of side panels 112, and has an accommodating cavity 110. The side panels 112 are preferably fixed to the base 111 in a foldable manner relative to the base 111 to facilitate the handling and transportation of the box body. The liquid bag (not shown in the figures) is lined in the accommodating cavity 110 of the box body 11 to contain the liquid. The liquid bag is usually made of a high molecular organic material, such as PP, PE and other materials. The liquid bag has a closed cavity body and a filling port for filling the liquid. Some liquid bags also have a discharging port for discharging the liquid. In this embodiment, the valve installed on the discharging port is used for illustration.

The discharging port of the liquid bag is typically located at the lower portion of the bag body, and a valve 2 is mounted on the discharging port to facilitate the discharge of the liquid within the bag. The box body 11 includes a window 12 at a location corresponding to the discharging port, and the valve 2 mounted on the discharging port is disposed within the window 12.

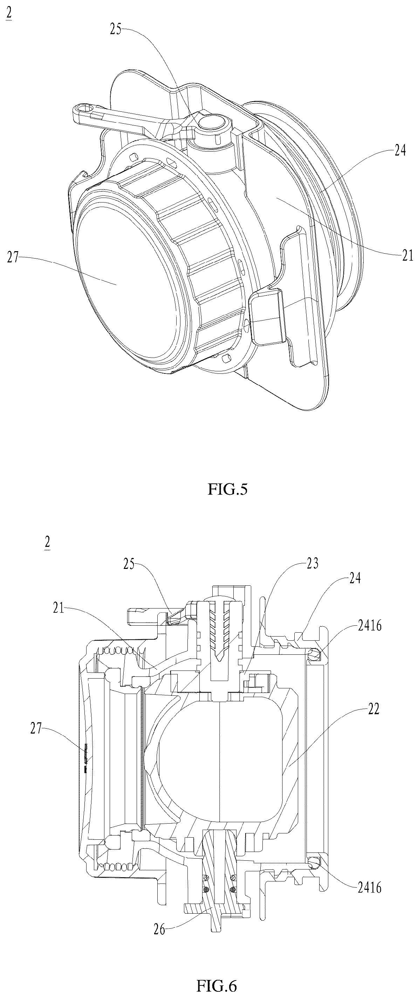

Referring to FIGS. 5-8 , the valve 2 comprises a valve body 21, a valve core 22, a driving member 23, and a flange member 24. Wherein the valve body 21 has a valve cavity 211, an inlet portion 212, and an outlet portion 213. The inlet portion 212 has a second inlet passage 2121 extending through the inlet portion 212 and communicating with the valve cavity 211. The outlet portion 213 has a second outlet passage 2131 extending through the outlet portion 213 and communicating with the valve cavity 211. In this embodiment, the second inlet passage 2121 and the second outlet passage 2131 are coaxially arranged. The valve core 22 is limited within the valve cavity 211 by a positioning ring 223. A positioning rod 26 is also provided at the bottom of the valve body 21, and the positioning rod 26 extends through the valve body and connects to the bottom of the valve core 22, so as to allow the valve core 22 to be rotated about the positioning rod 26, and be engaged with an outer valve seat 221 located in the inlet portion 212 or an inner valve seat 222 located in the outlet portion 213 to open or close the valve cavity 211. A driving member 23 is provided at the top of the valve core 22 opposite to the positioning rod 26, and the driving member 23 passes through the valve body 21 and is drivingly connected to the valve core 22 to drive the valve core 22 to open or close the valve cavity. Preferably, the valve 2 further has an operating rod 25, which is fixedly connected to the driving member 23. By operating the operating rod 25, the driving member 23 drives the valve core 22 to move. Another preferred embodiment is that the valve 2 further includes a valve cover 27, which is detachably connected to the inlet portion 212 by a threaded connection. The flange member 24 is sealedly connected to the outlet portion 213 of the valve body 21. It should be noted that the structure of the valve body and its valve core and the driving member shown above is only an example, and other structures that can be matched with flange member in the prior art can also be applied here.

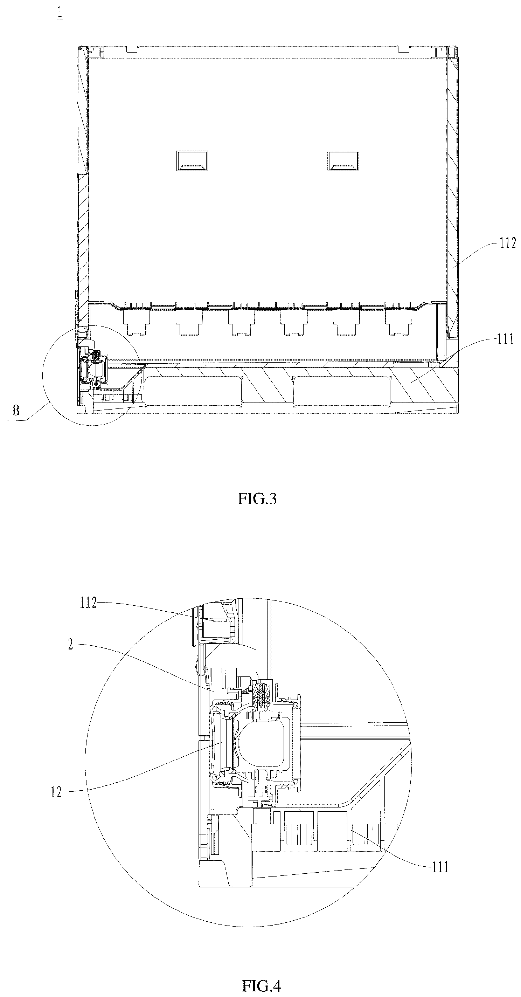

Referring to FIG.4, in the prior art, the flange plate of the flange member used for welding to the liquid bag is always located at the rightmost end of the flange member, therefore, in the prior art, the distance between the flange surface and the inner wall of the box body is D1, when the liquid bag is filled with liquid, a tensile pulling force is generated between the liquid and the side wall of the box body, increasing the probability of the liquid bag to damaged due to this pulling force during transportation.

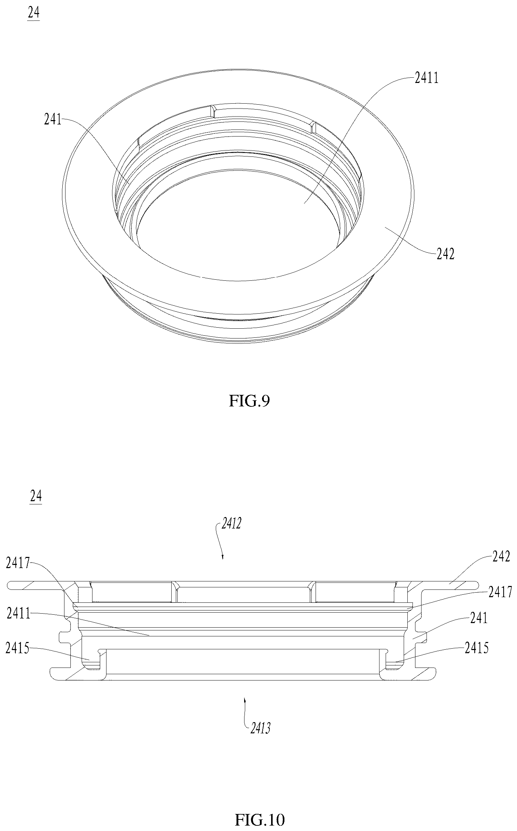

Referring to FIG.9 and 10, the flange member 24 in this embodiment comprises a tube body 241 and a flange plate 242. The tube body 241 has a first passage 2411 extending therethrough. Two ends of the first passage 2411 are defined as a first inlet end 2412 and a first outlet end 2413 respectively. The inner wall of the tube body 241 also has an annular flange 2414 extending into the first passage 2411. The annular flange 2414 is located on the tube body 241 closer to the first outlet end 2413.

The tube body 241 extends through the flange plate 242 in the axial direction of the flange plate and is fixedly connected to the flange plate 242. The flange plate 242 is located on the tube body 241 closer to the first inlet end 2412. The tube body 241 and the flange plate 242 are typically plastic parts and can be integrally formed using an injection molding process, but the present invention is not limited thereto. They can also be fixedly connected using methods such as welding.

The annular flange 2414 is used to sealedly abut against a portion of the valve body inserted into the first passage 2411, thereby achieving a sealed connection between the flange member 24 and the valve body, and the flange plate is welded to the edge of an opening of the liquid bag. Since the annular flange 2414 is close to the first outlet end 2413 and the flange plate 242 is closer to the first inlet end 2412, the flange plate 242 is also closer to the valve body. Referring to FIG.4 again, when the flange member 24 is welded to the liquid bag, compared to the existing valve structure, the distance between the flange plate 242 of the flange member 24 of the present application and the side wall of the box body is D2, compared with D1 of the prior art, it effectively reduces the distance between the flange plate and the side wall of the box body, thereby greatly reducing the pulling force on the liquid bag at this position, avoiding damage to the liquid bag during transportation.

Referring to FIG. 2 again, in this specific embodiment, the valve 2 is movably located within the window 12, so that when the liquid bag is filled with liquid, the valve 2 can adaptively slide a certain distance within the window 12 by the pressure of the liquid bag, so as to adaptively reduce the distance between the flange plate 242 and the side wall of the box body, thereby further reducing the pulling force on the liquid bag at this position.

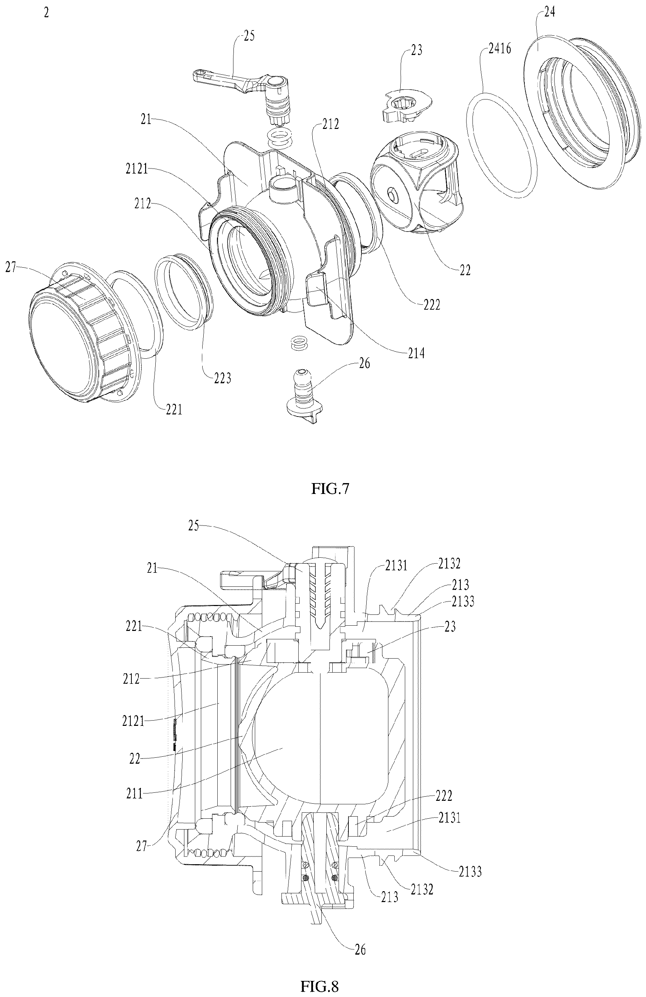

Additionally, the valve 2 may aslo be fixedly assembled within the window 12. Referring to FIG.7, the valve body 21 is provided with a hook member 214 fixedly connected to the edge of the window 12. To this end, a boss portion 121 protruding into the accommodating cavity is provided on the edge of the window 12 facing the inner sidewall of the accommodating cavity. A top surface of the boss portion 121 does not exceed the flange member 24, so as to further reduce the distance between the flange plate 242 and the sidewall of the box body, thereby further reducing the pulling force on the liquid bag at this location.

Referring to FIG.10, in this specific embodiment, the outer end surface of the flange plate 242 is flush with the end surface of the first inlet end 2412 of the tube body 241, and the outer end surface of the annular flange 2414 is flush with the end surface of the second outlet end 2413, that is, the flange plate 242 and the annular flange 2414 are respectively located on the two axial ends of the tube body, so that the flange plate 242 can be closer to the side wall of the body.

Referring to FIG.10 again, in this specific embodiment, the annular flange 2414 is provided with an annular recess 2415 recessed in the axial direction of the first passage 2411. The opening side of the annular recess 2415 faces the first inlet end. The annular recess 2415 is used to accommodate a flange sealing ring 2416 to better achieve a sealing abutment with the portion of the valve body inserted into the first passage 2411. Preferably, the free end surface of the outlet portion 213 is a sealing portion 2133 that directly faces the annular recess 2415. When the outlet portion 213 is fixedly connected to the flange member 24, the sealing portion 2133 and the flange sealing ring 2416 come into sealing contact to achieve a sealed connection between the outlet portion 213 and the flange member 24.

Referring to FIGS.6, 8, and 10, the inner wall of the tube body 241 is provided with a snapping groove 2417 located between the first inlet end 2412 and the annular flange 2414, and the outer wall of the outlet portion 213 of the valve body 21 is provided with a snapping portion 2132 that matches to the snapping groove 2417. During assembly, the outlet portion 213 is inserted into the first passage 2411 from the first inlet end 2412 of the tube body 241 and is fixedly connected to the tube body 241 through the engagement between the snapping portion 2132 and the snapping groove 2417, thereby facilitating the assembly connection between the valve body 21 and the flange member 24.

While the preferred embodiments of the present invention have been described in detail above, it should be understood that, after reading the above teachings of the present invention, those skilled in the art may make various changes or modifications to the present invention. Such equivalents also fall within the scope defined by the appended claims.

## Claims

1. A flangemember, comprising:
a tube body, which has a first passage extending therethrough, two ends of the first passage are respectively a first inlet end and a first outlet end, and an inner wall of the tube body has an annular flange extending into the first passage, the annular flange is closer to the first outlet end; and
a flange plate;
wherein the tube body extends through the flange plate in an axial direction of the flange plate and is fixedly connected to the flange plate, and the flange plate is closer to the first inlet end.

2. The flange member according to claim 1, wherein the inner wall of the tube body is provided with an inwardly concave snapping groove or an outwardly convex snapping portion, and the snapping groove or the snapping portion is located between the first inlet end and the annular flange.

3. The flange member according to claim 1, wherein the annular flange is provided with an annular recess axially recessed along the first passage, and an opening side of the annular recess faces the first inlet end.

4. The flange member according to claim 1, wherein an outer end surface of the flange plate is flush with an end surface of the first inlet end, and an outer end surface of the annular flange is flush with an end surface of the first outlet end.

5. A valve, comprising:
a valve body, which has a valve cavity, an inlet portion, and an outlet portion, the inlet portion has a second inlet passage extending therethrough and communicating with the valve cavity, and the outlet portion has a second outlet passage extending therethrough and communicating with the valve cavity;
a valve core, which is movably provided in the valve cavity;
a driving member, which extends through the valve body and drives the valve core to open or close the valve cavity;
a flange member, comprising a tube body and a flange plate, wherein the tube body has a first passage extending therethrough, two ends of the first passage are respectively a first inlet end and a first outlet end, and an inner wall of the tube body has an annular flange extending into the first passage, the annular flange is closer to the first outlet end; the tube body extends through the flange plate in an axial direction of the flange plate and is fixedly connected to the flange plate, and the flange plate is closer to the first inlet end;
wherein the outlet portion is located in the first passage, and the outlet portion is sealedly connected to the flange member.

6. The valve according to claim 5, wherein the inner wall of the tube body and an outer wall of the outlet portion are respectively provided with one of a snapping groove and a snapping portion, and the snapping groove or the snapping portion of the inner wall of the tube body is located between the first inlet end and the annular flange, and the tube body is operatively fixed to the outlet portion through the snapping groove and the snapping portion.

7. The valve according to claim 5, wherein the annular flange is provided with an annular recess axially recessed along the first passage, an opening side of the annular recess faces the first inlet end, and a sealing member is disposed in the annular recess; the outlet portion has a sealing portion directly facing the annular recess, and the sealing portion is in sealing contact with the sealing member.

8. The valve according to claim 5, wherein the second outlet passage is coaxially arranged with the first passage.

9. A liquid bag, comprising:
a liquid bag body, which has a sealed cavity and an opening communicating with the cavity;
a flange member, which is the flange member according to any one of claims 1 to 4;
wherein the first outlet end of the tube body passes through the opening and is located in the cavity, and a surface of the flange plate facing the first outlet end is sealedly connected and fixed to the liquid bag body around the opening.

10. A liquid bag, comprising:
a liquid bag body, which has a closed cavity and an opening communicating with the cavity;
a valve, which is the valve according to any one of claims 5 to 8;
wherein the first outlet end of the tube body passes through the opening and is located in the cavity, and a surface of the flange plate facing the first outlet end is sealedly connected and fixed to the liquid bag body around the opening.

11. A container, comprising:
a box body, which comprises a base and a plurality of side panels, wherein the plurality of side panels and the base form an accommodating cavity;
a liquid bag, a liquid bag body thereof has a closed cavity and an opening communicating with the cavity;
a valve, which is the valve according to any one of claims 5 to 8;
wherein the first outlet end of the tube body passes through the opening and is located in the cavity, and a surface of the flange plate facing the first outlet end is sealedly connected and fixed to the liquid bag body around the opening.

12. The container according to claim 11, wherein the box body is provided with a window, and the valve is movably located in the window.

13. The container according to claim 11, wherein a boss portion protruding into the accommodating cavity is provided on an edge ofthe window facing an inner side wall of the accommodating cavity, and a top surface of the boss portion does not exceed the flange member.
